(19) Europäisches Patentamt
European Patent Office
Office européen des brevets

(11) EP 4 535 454 A1

(12) **EUROPEAN PATENT APPLICATION**
published in accordance with Art. 153(4) EPC

(43) Date of publication:
**09.04.2025 Bulletin 2025/15**

(21) Application number: **23815305.0**

(22) Date of filing: **02.06.2023**

(51) International Patent Classification (IPC):
***H01M 4/136*** *(2010.01)*

(52) Cooperative Patent Classification (CPC):
Y02E 60/10

(86) International application number:
**PCT/CN2023/097913**

(87) International publication number:
**WO 2023/232128 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.06.2022 CN 202210623255**

(71) Applicant: **Shenzhen Capchem Technology Co., Ltd**
**Shenzhen, Guangdong 518118 (CN)**

(72) Inventors:
- **QIAN, Yunxian**
  **Shenzhen, Guangdong 518118 (CN)**
- **HU, Shiguang**
  **Shenzhen, Guangdong 518118 (CN)**
- **WANG, Yong**
  **Shenzhen, Guangdong 518118 (CN)**
- **LI, Hongmei**
  **Shenzhen, Guangdong 518118 (CN)**
- **XIANG, Xiaoxia**
  **Shenzhen, Guangdong 518118 (CN)**

(74) Representative: **Herrero & Asociados, S.L.**
**Edificio Aqua - Agustín de Foxá, 4-10**
**28036 Madrid (ES)**

(54) **POSITIVE ELECTRODE PLATE AND LITHIUM-ION BATTERY**

(57) To address the issue that it is difficult to ensure energy density, safety, and cycle life for the existing lithium-ion battery, the application proposes a positive electrode plate, which includes a positive electrode material layer. The positive electrode material layer includes a positive electrode active material and a compound represented by structural formula I:

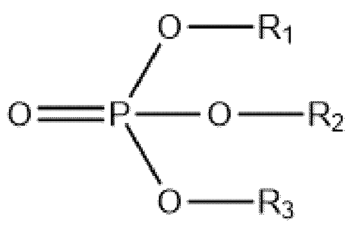

Structural formula I

the positive electrode active material includes an active material represented by formula (1):

$LiMn_xFe_{1-x}PO_4$ Formula (1)

the positive electrode plate meets the following requirements:

$$0.12 \le \frac{1000k}{Rn} \le 350;$$

EP 4 535 454 A1

and $0.1 \le n \le 8.1$, $0.005 \le k \le 0.5$, $0.5 \le R \le 13$. Meanwhile, the application also discloses a lithium-ion battery, including the positive electrode plate. The positive electrode plate provided by the application allows for the compatibility between the compound represented by structural formula I and the positive active material. This will enhance the structural stability of the positive active material during charging and discharging, thus effectively improving the high-temperature cycle performance.

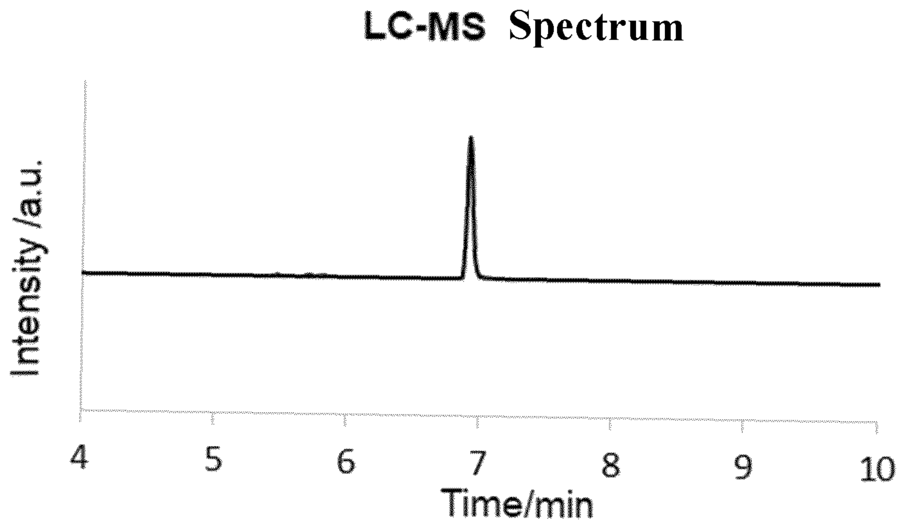


Fig. 1

## Description

### Technical field

The present application belongs to the technical field of energy storage electronic components, and particularly relates to a positive electrode plate and a lithium-ion battery.

### Background

Because of its irreplaceable advantages such as low self-discharge rate, long cycle life, high working voltage, and low pollution, lithium-ion batteries are widely employed in everyday life as power supplies. Lithium-ion batteries have numerous applications in new energy vehicles and other industries.

In terms of positive electrode materials, phosphates with an olivine structure has high safety properties, and lithium iron phosphate is one of them, but it has some drawbacks, such as a low discharge voltage platform (around 3.4V) and low energy density, which will limit the endurance mileage of electric vehicles.

Lithium manganese iron phosphate contains iron atoms and manganese atoms, which has good safety performance. The $Mn^{3+}/Mn^{2+}$ pair can realize the intercalation and deintercalation of $Li^+$ around 4.0V (vs.Li+/Li), and the capacity of the 4.0V platform can be obtained, improving the energy density of the battery. However, manganese ions in lithium manganese iron phosphate will be dissolved during the cycle and subsequently irreversibly embedded into the lithium-ion deintercalation site in the negative electrode, reducing the battery's cycle capacity and cycle life.

However, while the layered ternary material lithium nickel manganese cobalt has a high energy density, it also has certain drawbacks, including chemical stability, safety performance, and insufficient cycle life due to manganese ion dissolution.

The current challenge is to develop a battery that combines the exceptional safety and long life of phosphate positive electrode material with an olivine structure with the high specific energy properties of ternary positive electrode material.

### Summary of the invention

The present application provides a positive electrode plate and a lithium-ion battery, seeking to address the problem that the existing lithium-ion battery has difficulty ensuring energy density, safety, and cycle life.

The technical solutions adopted by the application to solve the technical problems are as follows.

In one aspect, the application provides a positive electrode plate, which includes a positive electrode material layer; the positive electrode material layer includes a positive electrode active material and a compound represented by structural formula I:

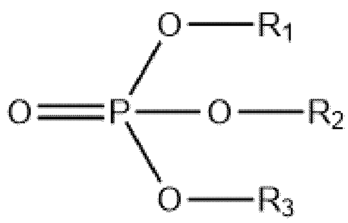

Structural formula I

$R_1$, $R_2$ and $R_3$ are each independently selected from an alkyl group with 1-5 carbon atoms, a fluoroalkyl group with 1-5 carbon atoms, an ether group with 1-5 carbon atoms, a fluoroether group with 1-5 carbon atoms and an unsaturated hydrocarbon group with 2-5 carbon atoms, and at least one of $R_1$, $R_2$ and $R_3$ is the unsaturated hydrocarbon group with 2-5 carbon atoms;

the positive electrode active material contains at least elements of Li, Mn and Fe, and includes an active material represented by formula (1):

$$LiMn_xFe_{1-x}PO_4 \qquad \text{Formula (1)}$$

in formula (1), $0 \le x < 1$;

the positive electrode plate meets the following requirements:

$$0.12 \leq \frac{1000k}{Rn} \leq 350;$$

and

$$0.1 \leq n \leq 8.1,\ 0.005 \leq k \leq 0.5,\ 0.5 \leq R \leq 13;$$

where n is a molar ratio of element Mn to element Fe in the positive electrode material layer;
k is a percentage mass content of the compound represented by structural formula I in the positive electrode material layer, in %; and
R is a surface roughness of the positive electrode material layer, in μm.

Optionally, the positive electrode plate meets the following requirements:

$$0.15 \leq \frac{1000k}{Rn} \leq 98.$$

Optionally, the molar ratio "n" of Mn to Fe in the positive electrode material layer is 0.3-6.
Optionally, the percentage mass content "k" of the compound represented by structural formula I in the positive electrode material layer is 0.05%-0.3%.
Optionally, the surface roughness "R" of the positive electrode material layer is 3μm-12μm.
Optionally, the positive electrode active material further includes an active material represented by formula (2), and a mass ratio of the active material represented by formula (1) to the active material represented by formula (2) is (20: 80)-(99: 1);

$Li_{1+y}Ni_aCo_bMn_{1-a-b}O_2$ Formula (2)

in formula (2), $-0.1 \leq y \leq 0.2$, $0<a<1$, $0<b<0.3$, $0<a+b<1$.
Optionally, the active material represented by formula (1) is selected from one or more of $LiFePO_4$, $LiFe_{0.3}Mn_{0.7}PO_4$, $LiFe_{0.35}Mn_{0.65}PO_4$ and $LiFe_{0.5}Mn_{0.5}PO_4$;
the active material represented by formula (2) is selected from $LiNi_{0.4}Co_{0.2}Mn_{0.4}O_2$, $LiNi_{0.5}Co_{0.2}Mn_{0.3}O_2$, $LiNi_{0.6}Co_{0.2}Mn_{0.2}O_2$, $LiNi_{0.7}Co_{0.1}Mn_{0.2}O_2$, $LiNi_{0.8}Co_{0.1}Mn_{0.1}O_2$ and $LiNi_{0.93}Co_{0.07}Mn_{0.1}O_2$.
Optionally, when the positive electrode plate is ultrasonically vibrated in a solvent to produce a solution and the solution is analyzed using liquid chromatography-mass spectrometry (LC-MS), a characteristic peak appears in an area with a retention time of 6.5 min-7.5 min.
Optionally, the alkyl group with 1-5 carbon atoms is selected from methyl, ethyl, n-propyl, isopropyl, n-butyl, isobutyl, sec-butyl, tert-butyl, n-pentyl, isopentyl, sec-pentyl or neopentyl; one or more hydrogen elements in the alkyl group with 1-5 carbon atoms are substituted by fluorine elements to form a group, and the fluoroalkyl alkyl group with 1-5 carbon atoms is selected from this group;

the unsaturated hydrocarbon group with 2-5 carbon atoms is selected from vinyl, propenyl, allyl, butenyl, pentenyl, methyl vinyl, methyl allyl, ethynyl, propynyl, propargyl, butynyl or pentynyl;
the ether group with 1-5 carbon atoms is selected from methyl ether, ethyl ether, ethyl methyl ether, propyl ether, methyl propyl ether or ethyl propyl ether; and
the fluoroether group with 1-5 carbon atoms is selected from fluorinated methyl ether, fluorinated ethyl ether, fluorinated ethyl methyl ether, fluorinated propyl ether, fluorinated methyl propyl ether or fluorinated ethyl propyl ether.

Preferably, the compound represented by structural formula I may be at least one selected from the group consisting of phosphoric acid tripropargyl ester, dipropargyl methyl phosphonate, dipropargyl fluoromethyl phosphate, dipropargyl methoxymethyl phosphate, dipropargyl ethyl phosphate, dipropargyl propyl phosphate, trifluoromethyl dipropargyl phosphate, dipropargyl-2, 2, 2-trifluoroethyl phosphate, dipropargyl-3, 3, 3-trifluoropropyl phosphate, hexafluoroisopropyl dipropargyl phosphate, phosphoric acid triallyl ester, diallyl methyl phosphate, diallyl ethyl phosphate, diallyl propyl phosphate, trifluoromethyl diallyl phosphate, dipropargyl methyl ether phosphate, dipropargyl fluoromethyl ether phosphate, 2, 2, 2-trifluoroethyl diallyl phosphate, diallyl 3, 3, 3-trifluoropropyl phosphate or diallyl hexafluoroisopropyl phosphate.
In another aspect, the application provides a lithium-ion battery, which includes a negative electrode, a non-aqueous electrolyte and a positive electrode plate as described above.

According to the positive electrode plate provided by the application, the active material represented by formula (1) with an olivine structure is added into the positive electrode material layer. In order to solve the problem of insufficient cycle life caused by the dissolution of Mn ions in the active material represented by formula (1), the compound represented by structural formula I is added to the positive electrode material layer. The inventors find that when the molar ratio "n" of Mn to Fe in the positive electrode material layer, the percentage mass content "k" of the compound represented by structural formula I in the positive electrode material layer and the surface roughness "R" of the positive electrode material layer meet the condition of $0.12 \leq \frac{1000k}{Rn} \leq 350$, the compatibility between the compound represented by structural formula I and the positive electrode active material can be fully exerted. This will enhance the structural stability of the positive active material during charging and discharging, thus effectively improving the high-temperature cycle performance. Therefore, the positive electrode plate developed according to the present application has a high energy density, better safety and long cycle life.

## Brief description of the drawings

Fig. 1 is a diagram of a positive electrode plate provided by the present application tested using liquid chromatography-mass spectrometry (LC-MS).

## Detailed description of preferred embodiments

In order to make the technical problems, technical solutions and beneficial effects of the present application more clear, the application will be further explained in detail below with reference to the drawings and embodiments. It should be understood that the specific embodiments described here are only used to illustrate the application, rather than to limit the application.

The embodiment of the application provides a positive electrode plate, which includes a positive electrode material layer; the positive electrode material layer includes a positive electrode active material and a compound represented by structural formula I:

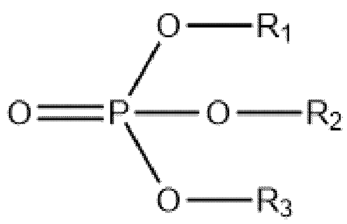

Structural formula I

$R_1$, $R_2$ and $R_3$ are each independently selected from an alkyl group with 1-5 carbon atoms, a fluoroalkyl group with 1-5 carbon atoms, an ether group with 1-5 carbon atoms, a fluoroether group with 1-5 carbon atoms and an unsaturated hydrocarbon group with 2-5 carbon atoms, and at least one of $R_1$, $R_2$ and $R_3$ is the unsaturated hydrocarbon group with 2-5 carbon atoms;

the positive electrode active material contains at least elements of Li, Mn and Fe, and includes an active material represented by formula (1):

$LiMn_xFe_{1-x}PO_4$ Formula (1)

in formula (1), $0 \leq x < 1$;

the positive electrode plate meets the following requirements:

$$0.12 \leq \frac{1000k}{Rn} \leq 350;$$

and

$$0.1 \leq n \leq 8.1,\ 0.005 \leq k \leq 0.5,\ 0.5 \leq R \leq 13;$$

where n is a molar ratio of element Mn to element Fe in the positive electrode material layer;
k is a percentage mass content of the compound represented by structural formula I in the positive electrode material layer, in %; and
R is a surface roughness of the positive electrode material layer, in μm.

The active material represented by formula (1) with an olivine structure is added into the positive electrode material layer. In order to solve the problem of insufficient cycle life caused by the dissolution of Mn ions in the active material represented by formula (1), the compound represented by structural formula I is added to the positive electrode material layer. The inventors find that when the molar ratio "n" of Mn to Fe in the positive electrode material layer, the percentage mass content "k" of the compound represented by structural formula I in the positive electrode material layer and the surface roughness "R" of the positive electrode material layer meet the condition of $0.12 \leq \frac{1000k}{Rn} \leq 350$, the compatibility between the compound represented by structural formula I and the positive electrode active material can be fully exerted. This will enhance the structural stability of the positive active material during charging and discharging, thus effectively improving the high-temperature cycle performance. Therefore, the positive electrode plate developed according to the present application has a high energy density, better safety and long cycle life.
In a preferred embodiment, the positive electrode plate meets the following requirements:

$$0.15 \leq \frac{1000k}{Rn} \leq 98.$$

When the molar ratio "n" of Mn to Fe in the positive electrode material layer, the percentage mass content "k" of the compound represented by structural formula I in the positive electrode material layer and the surface roughness "R" of the positive electrode material layer meet the above conditions, the dissolution of manganese ions and the decomposition of electrolyte can be further inhibited, thus improving the battery cycle performance.
In a specific embodiment, the molar ratio "n" of element Mn to element Fe in the positive electrode material layer may be 0.1, 0.15, 0.25, 0.35, 0.4, 0.5, 0.65, 0.7, 0.8, 0.9, 1, 2, 2.5, 3, 3.5, 4, 4.5, 5, 5.5, 6, 6.5, 7, 7.5, 8 and 8.1.
In a preferred embodiment, the molar ratio "n" of Mn to Fe in the positive electrode material layer is 0.3-6.
The molar ratio "n" of element Mn to element Fe in the positive electrode material layer is related to the manganese content of the active material represented by formula (1) and other active materials that may be added in the positive electrode active material, in which element Fe can be solid-dissolved with element Mn to form a stable orthorhombic olivine structure. The value "n" can directly reflect the dissolution difficulty level and energy density of element Mn in the positive electrode material layer. If the value "n" is too small, the safety and cycle life of the battery will be improved, but the corresponding decline of element Mn will lead to a decrease of battery voltage platform. If the value "n" is too large, the energy density of the battery will increase, but the dissolution of Mn ions will intensify, which leads to the shortening of the battery cycle life.
In specific embodiments, the percentage mass content "k" of the compound represented by structural formula I in the positive electrode material layer may be 0.005%, 0.008%, 0.01%, 0.02%, 0.04%, 0.08%, 0.1%, 0.15%, 0.2%, 0.25%, 0.3%, 0.35%, 0.4%, 0.45% or 0.5%.
In a preferred embodiment, the percentage mass content "k" of the compound represented by structural formula I in the positive electrode material layer is 0.05%-0.3%.
When the compound represented by structural formula I is used as an electrolyte additive, the compound represented by structural formula I forms a film on the positive electrode and the negative electrode at the same time. Because the compound represented by structural formula I is in a free state in the electrolyte, part of the compound represented by structural formula I remains in the electrolyte, which affects the ion conduction effect. Meanwhile, it is difficult for the compound represented by structural formula I in the electrolyte to completely penetrate the positive or negative electrodes, and the formed passive film is difficult to form a tight integration with the positive electrode or the negative electrode, which leads to an increase in the battery internal resistance. In order to solve this problem, the compound represented by structural formula I is added to the positive electrode material layer, and the interfacial film formed on the surface of the positive electrode active material by the compound represented by structural formula I can effectively inhibit the electrochemical oxidation reaction between the electrolyte and the positive electrode active material. This greatly reduces the dissolution of Mn ions in the positive electrode active material, and improves the oxidation resistance and structural stability of the active material. Moreover, due to its phosphorus-containing functional group, film formation on the surface of the positive electrode active material will improve the safety performance. Therefore, on the one hand, the compound represented by structural formula I used as an additive of the positive electrode paste can retain

its passivation effect on the positive electrode active material, which improves the oxidation resistance and structural stability of the positive electrode, thus further improving the electrochemical performance and safety performance of the lithium-ion battery. On the other hand, it can also overcome the problem of increasing the battery's internal resistance caused by using it as an electrolyte additive in the prior art.

In the positive electrode material layer, if the content of the compound represented by structural formula I is too small, its passivation effect on the positive electrode active material is limited, then the improvement effect on the battery performance is not obvious. If the content of the compound represented by structural formula I is too much, the film will be too thick on the surface of the positive electrode active material, which will increase the internal resistance of battery.

In a specific embodiment, the surface roughness "R" of the positive electrode material layer is 0.5μm, 0.55μm, 0.6μm, 0.65μm, 0.7μm, 0.75μm, 0.8μm, 0.85μm, 0.9μm, 0.95μm, 1μm, 2μm, 3μm, 4μm, 5μm, 5.5μm, 6μm, 6.5μm, 7.5μm, 8μm, 8.5μm, 9.5μm, 1μm, 11μm, 12μm or 13μm.

In a preferred embodiment, the surface roughness "R" of the positive electrode material layer is 3μm-12μm.

In the preparation of the positive electrode plate, the surface roughness "R" of the positive electrode active material layer in the above range can be obtained by adjusting one or more of the average particle size D50 of the positive electrode active material and the surface roughness at the step of cold rolling press.

The surface roughness "R" of the positive electrode active material layer is known in the art, and it may be tested using known instruments and procedures. It can be measured with a surface roughness meter, such as NDT110 surface roughness meter from Beijing Kaida Science Instrument Technology Co., Ltd.

The surface roughness "R" of the positive electrode material layer has a great influence on the function of the compound represented by structural formula I. Because the compound represented by structural formula I participates in the formation of the interface film on the surface of the positive electrode material layer, the surface roughness "R" of the positive electrode material layer directly affects the shape and stability of the interface film. Meanwhile, if the surface roughness "R" of the positive electrode material layer is too small, the active reaction area of the positive electrode plate will be small, and the effect of the compound represented by structural formula I is not obvious. However, if the surface roughness "R" of the positive electrode material layer is too large, the surface reaction activity of the positive electrode plate will be large, which will increase the side reaction of electrolyte at the positive electrode and is not conducive to battery performance. Therefore, in order to cooperate with the film formation of the compound represented by structural formula I and improve the charge and discharge performances of the lithium-ion battery, the surface roughness of the electrode should be designed in a reasonable range.

In some embodiments, the positive electrode active material further includes an active material represented by formula (2), and the mass ratio of the active material represented by formula (1) to the active material represented by formula (2) is (20: 80)-(99: 1);

$$Li_{1+y}Ni_aCo_bMn_{1-a-b}O_2 \qquad \text{Formula (2)}$$

in formula (2), $-0.1 \leq y \leq 0.2$, $0<a<1$, $0<b<0.3$, $0<a+b<1$.

An active material represented by formula (1) with an olivine structure and an active material represented by formula (2) of ternary material are added into a positive electrode material layer. The active material represented by formula (1) with an olivine structure has the characteristics of high material safety, especially flame retardancy performance under short-circuit conditions. And the active material represented by formula (2) has the characteristic of high specific energy. By compounding the active material represented by formula (1) and the active material represented by formula (2), the positive electrode plate has high energy density and safety performance.

In some embodiments, the active material represented by formula (1) is selected from one or more of $LiFePO_4$, $LiFe_{0.3}Mn_{0.7}PO_4$, $LiFe_{0.35}Mn_{0.65}PO_4$ and $LiFe_{0.5}Mn_{0.5}PO_4$.

The active material represented by formula (2) is selected from $LiNi_{0.4}Co_{0.2}Mn_{0.4}O_2$, $LiNi_{0.5}Co_{0.2}Mn_{0.3}O_2$, $LiNi_{0.6}Co_{0.2}Mn_{0.2}O_2$, $LiNi_{0.7}Co_{0.1}Mn_{0.2}O_2$, $LiNi_{0.8}Co_{0.1}Mn_{0.1}O_2$ and $LiNi_{0.93}Co_{0.07}Mn_{0.1}O_2$.

In some embodiments, the particle size of D50 of the active material represented by formula (1) is 0.5-8 μm.

In some embodiments, the particle size of D50 of the active material represented by formula (2) is 2-16 μm.

In some embodiments, when the positive electrode plate is ultrasonically vibrated in a solvent to produce a solution and the solution is analyzed using liquid chromatography-mass spectrometry (LC-MS), a characteristic peak appears in an area with a retention time of 6.5 min-7.5 min.

The procedure of performing liquid chromatography-mass spectrometry chromatographic analysis on the positive electrode plate includes the following steps: disassembling the battery in a glove box, taking out the positive electrode plate, immersing the cut positive electrode plate in a proper solvent (such as DMC and acetonitrile), and performing ultrasonic vibration for a proper time to dissolve substances in the positive material layer of the positive electrode plate into the solvent, and then detecting the solution using liquid chromatography-mass spectrometry (LC-MS). There is a characteristic peak in the area with retention time of 6.5 min-7.5 min, as shown in Figure 1. The model of the liquid chromatography-mass spectrometry is Waters ACQUITY UPLC/Xevo G2-XS Qtof MS, and the chromatographic conditions are as follows: Waters T3 column is adopted, the column temperature is 35-40°C, the mobile phase is a mixture of 40% water and 60% acetonitrile, and the mobile phase flow rate is 0.2-0.3.

In the present application, the alkyl group with 1-5 carbon atoms may be selected from, for example, methyl, ethyl, n-propyl, isopropyl, n-butyl, isobutyl, sec-butyl, tert-butyl, n-pentyl, isopentyl, sec-pentyl and neopentyl; one or more hydrogen elements in the alkyl group with 1-5 carbon atoms are substituted by fluorine elements to form a group, and the fluoroalkyl alkyl group with 1-5 carbon atoms is selected from this group.

The unsaturated hydrocarbon group with 2-5 carbon atoms may be selected from, for example, vinyl, propenyl, allyl, butenyl, pentenyl, methyl vinyl, methyl allyl, ethynyl, propynyl, propargyl, butynyl and pentynyl.

The ether group with 1-5 carbon atom may be selected from, for example, methyl ether, ethyl ether, ethyl methyl ether, propyl ether, methyl propyl ether and ethyl propyl ether.

The fluoroether group with 1-5 carbon atoms is selected from, for example, fluorinated methyl ether, fluorinated ethyl ether, fluorinated ethyl methyl ether, fluorinated propyl ether, fluorinated methyl propyl ether or fluorinated ethyl propyl ether.

In a preferred embodiment, the compound represented by structural formula I may be at least one selected from the group consisting of phosphoric acid tripropargyl ester, dipropargyl methyl phosphonate, dipropargyl fluoromethyl phosphate, dipropargyl methoxymethyl phosphate, dipropargyl ethyl phosphate, dipropargyl propyl phosphate, trifluoromethyl dipropargyl phosphate, dipropargyl-2, 2, 2-trifluoroethyl phosphate, dipropargyl-3, 3, 3-trifluoropropyl phosphate, hexafluoroisopropyl dipropargyl phosphate, phosphoric acid triallyl ester, diallyl methyl phosphate, diallyl ethyl phosphate, diallyl propyl phosphate, trifluoromethyl diallyl phosphate, dipropargyl methyl ether phosphate, dipropargyl fluoromethyl ether phosphate, 2, 2, 2-trifluoroethyl diallyl phosphate, diallyl 3, 3, 3-trifluoropropyl phosphate or diallyl hexafluoroisopropyl phosphate.

In a preferred embodiment, the compound represented by structural formula I is selected from one or more of the following compounds:

| Compound 1 | Compound 2 | Compound 3 |
|---|---|---|
| 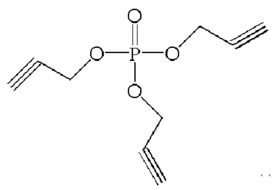 | 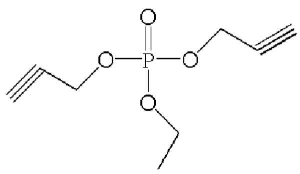 | 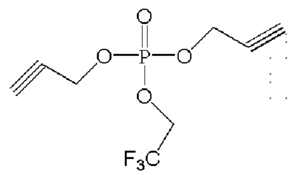 |
| Compound 4 | Compound 5 | Compound 6 |
| 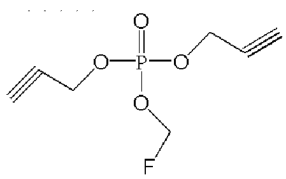 | 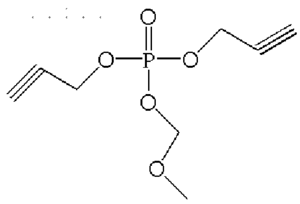 | 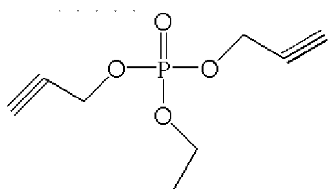 |

The above compounds represented by structural formula I can form an effective interface film on the surface of the positive electrode active material in situ. This ensures the low impedance, cycle and safety performance for battery.

In some embodiments, the compacted density of the positive electrode active material layer is less than or equal to 3.6 g/$cm^3$.

The compacted density of the positive electrode material layer is the coating weight per unit volume on one side of the positive electrode material layer. The lower the compacted density, the easier it is for the electrolyte to infiltrate the positive electrode material layer and the better its surface dynamics. However, if the compacted density is too low, it will have a direct impact on the battery's energy density, making the coating process of positive electrode paste difficult to control. Therefore, when the compacted density of the positive electrode material layer falls within the above-mentioned preferred range, the dynamic performance of the battery can be better improved and the higher energy density can be ensured.

In some embodiments, the thickness of the positive electrode material layer is 80-200 μm, and the single-sided surface density of the positive electrode material layer is 15-30 mg/$cm^2$.

In the description of the present application, the term "single-sided surface density of the positive electrode material layer" refers to the coating weight of the positive electrode material layer on the single surface of the positive electrode per unit area, and the following ways may be adopted as the coating weight measurement method: take 30

pieces of current collector foil, in which the area of each piece is S1, respectively weigh its weight, and take the average value as W1; coat slurry with the same weight on one side of each current collector foil, dry at 120°C for 1 hour after uniform coating, after detect that there is basically no solvent, respectively weigh the dried single-sided slurry coated current collector foil, and take the average value as W2; then the surface density W=(W2-W1)/S1 of the single-sided active material layer on the current collector can be obtained.

The single-sided surface density of the positive electrode material layer is a key technical parameter for the design and preparation of secondary batteries. With the same length of the positive electrode plate, if the single-sided surface density of the positive electrode material layer is large, the capacity of the battery will increase, and the battery temperature rise will increase during charging, which will affect the safety performance. However, if the single-sided surface density of the positive electrode plate is small, the capacity of the battery will decrease, and the battery temperature rise will be small during charging.

In some embodiments, the positive electrode material layer further includes a positive electrode binder and a positive electrode conductive agent. The positive electrode active material, the compound represented by structural formula I, the positive electrode binder and the positive electrode conductive agent are mixed to create the positive electrode material layer.

Based on the total mass of the positive electrode material layer being 100%, the mass percentage content of the positive electrode binder is 1-2%, and the mass percentage content of the positive electrode conductive agent is 0.5-2%. the positive electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, and thermoplastic resins such as thermoplastic polyimide, polyethylene and polypropylene, as well as acrylic resin, carboxymethyl cellulose sodium, polyvinyl butyral, ethylene-vinyl acetate copolymer, polyvinyl alcohol and styrene butadiene rubber.

The positive electrode conductive agent includes one or more of conductive carbon black, conductive carbon spheres, conductive graphite, conductive carbon fiber, carbon nanotubes, graphene or reduced graphene oxide.

In some embodiments, the compound represented by structural formula I is formed on the surface of the positive electrode material layer, or the compound represented by structural formula I is mixed in the positive electrode material layer.

When the compound represented by structural formula I is formed on the surface of the positive electrode material layer, its preparation method is as follows.

A coating containing a compound represented by structural formula I is formed on the surface of the positive electrode material layer by surface coating. Specifically, the positive electrode active material, positive electrode conductive agent and positive electrode binder might be dispersed in an organic solvent to produce a positive electrode slurry; after the positive electrode slurry is applied and dried to form a positive electrode material layer, the compound represented by structural formula I is dispersed in an organic solvent; the obtained solution of the compound represented by structural formula I is sprayed on the surface of the positive electrode material layer; and after drying to remove the solvent, the positive electrode material layer can be obtained, which includes the compound represented by structural formula I.

When the compound represented by structural formula I is mixed in the positive electrode material layer, its preparation method is as follows.

Method A: Preparing a positive electrode slurry of the positive electrode material layer, which contains the compound represented by structural formula I. Specifically, the compound represented by structural formula I, positive electrode active material, positive electrode conductive agent and positive electrode binder might be dispersed in an organic solvent to produce a positive electrode slurry, and then the positive electrode slurry is applied and dried to form a positive electrode material layer.

Method B: After preparing the positive electrode material layer, the positive electrode material layer is soaked in a solution containing the compound represented by structural formula I, so that the compound represented by structural formula I penetrates into the inside of the positive electrode material layer, and the solvent is dried and removed to obtain the positive electrode material layer containing the compound represented by structural formula I.

In some embodiments, the positive electrode further includes an positive electrode current collector, and the positive electrode material layer is formed on the surface of the positive electrode current collector.

The positive electrode current collector is selected from metal materials that can conduct electrons. Preferably, the positive electrode current collector includes one or more of Al, Ni, tin, copper and stainless steel. In a more preferred embodiment, the positive electrode current collector is selected from aluminum foil.

Another embodiment of the present application provides a lithium-ion battery, which includes a negative electrode plate, a non-aqueous electrolyte and a positive electrode plate as described above.

In some embodiments, the non-aqueous organic solvent includes one or more of ether solvent, nitrile solvent, carbonate solvent and carboxylic ester solvent.

In some embodiments, the ether solvent includes cyclic ether or chain ether, preferably chain ether with 3-10 carbon atoms and cyclic ether with 3-6 carbon atoms, and the specific cyclic ether may be but are not limited to 1,3-dioxolane (DOL), 1,4-dioxooxane (DX), crown ether, tetrahydrofuran (THF), 2-methyltetrahydrofuran (2-$CH_3$-THF) and 2-trifluoromethyltetrahydrofuran (2-$CF_3$-THF). Specifically, the chain ether may be but not limited to dimethoxymethane, diethoxymethane, ethoxymethoxymethane, ethylene glycol di-n-propyl ether, ethylene glycol di-n-butyl ether and diethylene glycol dimethyl ether. Dimethoxymethane, diethoxymethane and ethoxymethoxymethane with low viscosity and high ionic conductivity are particularly preferred because the solvability of chain ether and lithium ions is high and the ion dissociation can be improved. Ether compounds may be used alone or in any combinations and ratios of two or more kinds. The addition amount of ether compound is not particularly limited, which is within the range of not significantly damaging the effect of the high-voltage lithium ion battery of the present application. In the non-aqueous solvent volume ratio of 100%, the volume ratio is usually 1% or more, preferably 2% or more, more preferably 3% or more. Moreover, the volume ratio is usually 30% or less, preferably 25% or less, and more preferably 20% or less. When two or more ether compounds are used in combination, the total amount of ether compounds only needs to be in the above range. When the addition amount of ether compounds is within the above preferred range, it is easy to ensure the improvement effects of ionic conductivity brought by the increase of lithium ion dissociation degree and the decrease of viscosity of chain ether. In addition, when the negative electrode active material is a carbon material, the co-intercalation reaction of the chain ether and lithium ions can be suppressed, so that the input-output characteristics and the charge-discharge rate characteristics can be within an appropriate range.

In some embodiments, the nitrile solvent may be, but is not limited to, one or more of acetonitrile, glutaronitrile and malononitrile.

In some embodiments, the carbonate solvent includes a cyclic carbonate or a chain carbonate. The cyclic carbonate may be but not limited to one or more of ethylene carbonate (EC), propene carbonate (PC), γ-butyrolactone (GBL) and butylene carbonate (BC). The chain carbonate may be but not limited to one or more of dimethyl carbonate (DMC), ethyl methyl carbonate (EMC), diethyl carbonate (DEC) and dipropyl carbonate (DPC). The content of cyclic carbonate is not particularly limited, which is within the range of not significantly damaging the effect of the high-voltage lithium ion battery of the present application. However, in the case where one is used alone, the minimal content is usually 3% by volume or more, preferably 5% by volume or more, relative to the total amount of the solvent in the non-aqueous electrolyte. With this range, the decrease of conductivity caused by the decrease of the dielectric constant of the non-aqueous electrolyte can be avoided, so the high-current discharge characteristics, the stability with respect to the negative electrode and the cycle characteristics of the non-aqueous electrolyte battery can easily reach a good range. In addition, the maximum content is usually 90% or less by volume, preferably 85% or less by volume, and more preferably 80% or less by volume. With this range, the oxidation/reduction resistance of the non-aqueous electrolyte can be improved, thus contributing to the improvement of the stability during high-temperature storage. The content of the chain carbonate is not particularly limited, but it is usually 15% or more by volume, preferably 20% or more by volume, and more preferably 25% or more by volume, relative to the total amount of the solvent in the non-aqueous electrolyte. In addition, the volume ratio is usually 90% or less, preferably 85% or less, and more preferably 80% or less. By setting the content of the chain carbonate in the above range, the viscosity of the non-aqueous electrolyte can be easily kept with an appropriate range, and the decrease of ionic conductivity can be suppressed, thus contributing to a good range of the output characteristics of the non-aqueous electrolyte battery. When two or more kinds of chain carbonates are used in combination, the total amount of the chain carbonate only needs to be in the above range.

Carboxylic acid solvent includes cyclic carboxylic ester and/or chain carbonic ester. Examples of cyclic carboxylic ester include one or more of γ-butyrolactone, γ-valerolactone and δ-valerolactone. Examples of chain carbonic ester include one or more of methyl acetate (MA), ethyl acetate (EA), n-propyl acetate (EP), butyl acetate, propyl propionate (PP) and butyl propionate.

In some embodiments, sulfone solvent includes cyclic sulfones and chain sulfones, but preferably, in the case of cyclic sulfones, it is usually a compound with 3-6 carbon atoms, preferably 3-5 carbon atoms; and in the case of chain sulfones, it is usually a compound with 2-6 carbon atoms, preferably 2-5 carbon atoms. The addition amount of the sulfone solvent is not particularly limited, which is within the range of not significantly damaging the effect of the lithium ion battery of the present application. Compared with the total amount of solvent in non-aqueous electrolyte, the volume ratio is usually 0.3% or more, preferably 0.5% or more, more preferably 1% or more. Moreover, the volume ratio is usually 40% or less, preferably 35% or less, and more preferably 30% or less. When two or more kinds of sulfone solvent are used in combination, the total amount of the sulfone solvents only needs to meet the above range. When the addition amount of sulfone solvent is within the above range, the electrolyte with excellent high-temperature storage stability is easily to be obtained.

In a preferred embodiment, the solvent is a mixture of cyclic carbonic ester and chain carbonic ester.

In some embodiments, the non-aqueous electrolyte further includes a lithium salt. The lithium salt includes one or

more of $LiPF_6$, LiBOB, LiDFOB, $LiPO_2F_2$, $LiBF_4$, $LiSbF_6$, $LiAsF_6$, $LiN(SO_2CF_3)_2$, $LiN(SO_2C_2F_S)_2$, $LiC(SO_2CF_3)_3$, $LiN(SO_2F)_2$, $LiClO_4$, $LiAlCl_4$, $LiCF_3SO_3$, $Li_2B_{10}Cl_{10}$, and lithium salts of lower aliphatic carboxylic acids.

In a preferred embodiment, the lithium salt includes $LiPF_6$ and an supplemental lithium salt. The supplemental lithium salt includes LiBOB, LiDFOB, $LiPO_2F_2$, $LiBF_4$, $LiSbF_6$, $LiAsF_6$, $LiN(SO_2CF_3)_2$, $LiN(SO_2C_2F_5)_2$, $LiC(SO_2CF_3)_3$, $LiN(SO_2F)_2$, $LiClO_4$, $LiAlCl_4$, $LiCF_3SO_3$, $Li_2B_{10}Cl_{10}$, and lithium salts of lower aliphatic carboxylic acids.

Under the above conditions, $LiPF_6$ is added to the non-aqueous electrolyte as the main lithium salt, which, when combined with the auxiliary lithium salt, can further improve the thermal shock resistance of the battery. It is speculated that the compound represented by formula II contained in the positive electrode is dissolved in the nonaqueous electrolyte in a small amount, which cooperates with the combination of the above lithium salt, improving the stability of the non-aqueous electrolyte and preventing its decomposition and gas generation.

In some embodiments, the concentration of the lithium salt in the non-aqueous electrolyte is 0.1mol/L-8mol/L. In a preferred embodiment, the concentration of the electrolyte salt in the non-aqueous electrolyte is 0.5mol/L-4mol/L. Specifically, the concentration of the lithium salt may be 0.5mol/L, 1mol/L, 1.5mol/L, 2mol/L, 2.5mol/L, 3mol/L, 3.5mol/L and 4mol/L.

In some embodiments, in the non-aqueous electrolyte, the percentage mass content of $LiPF_6$ is 5%-20%, and the percentage mass content of the auxiliary lithium salt is 0.05%-5%.

In some embodiments, the non-aqueous electrolyte further includes an additive, and the additive includes at least one of cyclic sulfate compounds, sultone compounds, cyclic carbonate compounds, unsaturated phosphate compounds, borate compounds and nitrile compounds.

Preferably, the content of the additive is 0.01%-30% based on the total mass of the non-aqueous electrolyte being 100%.

Preferably, the cyclic sulfate compound is at least one selected from the group consisting of vinyl sulfate, 4-vinyl methylsulfate, propylene sulfate and vinyl methylsulfate.

The sultone compound is at least one selected from the group consisting of 1,3-propane sultone, 1,4-butane sultone and 1,3- propylene sultone.

The cyclic carbonate compound is at least one selected from the group consisting of vinylene carbonate, vinylethylene carbonate, fluoroethylene carbonate and the compound represented by structural formula II.

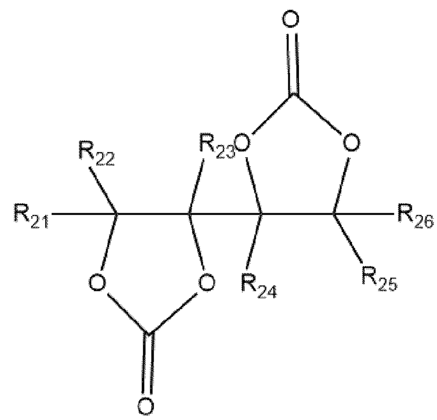

Structural formula II

In structural formula II, $R_{21}$, $R_{22}$, $R_{23}$, $R_{24}$, $R_{25}$ and $R_{26}$ are each independently selected from one of a hydrogen atom, a halogen atom and a C1-C5 group. Specifically, the compound represented by structural formula II includes at least one of

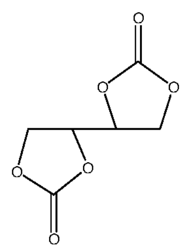 , 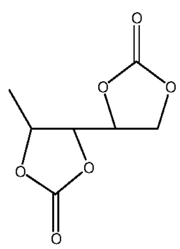 ,

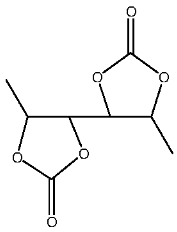 , 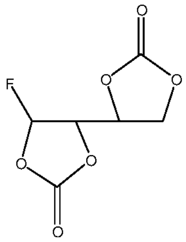 , 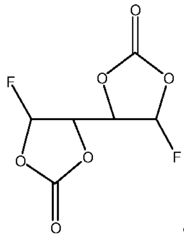 and 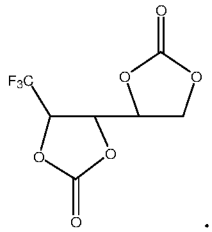 .

The phosphate compounds include both saturated phosphate compounds and unsaturated phosphate compounds, with unsaturated phosphate compounds being preferred. And the unsaturated phosphate compound is at least one selected from the compounds represented by structural formula III:

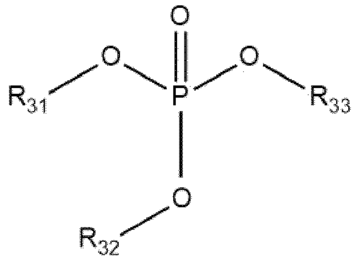

;

Structural formula III

In structural formula III, $R_{31}$, $R_{32}$ and $R_{33}$ are each independently selected from a C1-C5 saturated hydrocarbon group, an unsaturated hydrocarbon group, a halogenated hydrocarbon group,
$-Si(C_mH_{2m+1})_3$, m is a natural number of 1-3, and at least one of $R_{31}$, $R_{32}$ and $R_{33}$ is unsaturated hydrocarbon group.

In a ppreferred embodiment, the unsaturated phosphate compounds may be at least one selected from the group consisting of phosphoric acid tripropargyl ester, dipropargyl methyl phosphonate, dipropargyl ethyl phosphate, dipropargyl propyl phosphate,dipropargyl trifluoromethyl phosphate, dipropargyl-2, 2, 2-trifluoroethyl phosphate, dipropargyl-3, 3, 3-trifluoropropyl phosphate, dipropargyl hexafluoroisopropyl phosphate, phosphoric acid triallyl ester, diallyl methyl phosphate, diallyl ethyl phosphate, diallyl propyl phosphate, diallyl trifluoromethyl phosphate, diallyl-2 , 2 , 2-trifluoroethyl phosphate, diallyl-3, 3, 3-trifluoropropyl phosphate or diallyl hexafluoroisopropyl phosphate;

the borate compound is selected from at least one of tris (trimethylsilane) borate and tris (triethyl silicane) borate; and the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

In other embodiments, the additive may also include other additives that can improve the performance of the battery. For example, additives that can improve the safety performance of the battery, flame retardant additives such as fluorophosphate and cyclophosphazene, or overcharge prevention additives such as tert.-amylbenzene and tert-butyl benzene.

It should be noted that, unless otherwise specified, in general, the content of any optional substance for the additive in the non-aqueous electrolyte is less than 10%, preferably 0.1-5%, and more preferably 0.1%-2%. Specifically, the content of any optional substance fro the additive may be 0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5% and 10%.

In some embodiments, when the additive is selected from fluoroethylene carbonate, the content of the fluoroethylene carbonate is 0.05%-30% based on the total mass of the non-aqueous electrolyte being 100%.

In some embodiments, the negative electrode plate includes a negative electrode material layer. The negative electrode material layer further includes a negative electrode active material selected from at least one of a silicon-based negative electrode, a carbon-based negative electrode, a lithium-based negative electrode and a tin-based negative electrode.

The silicon-based negative electrode includes one or more of silicon material, silicon oxide, silicon-carbon composite material and silicon alloy material. The carbon-based negative electrode includes one or more of graphite, hard carbon, soft carbon, graphene and mesocarbon microbeads. The lithium-based negative electrode includes one or more of metal lithium or lithium alloy. The lithium alloy may be at least one of lithium silicon alloy, lithium sodium alloy, lithium

potassium alloy, lithium aluminum alloy, lithium tin alloy and lithium indium alloy. The tin-based negative electrode includes one or more of tin, tin carbon, tin oxide and tin metal compounds.

In some embodiments, the negative electrode material layer further includes a negative electrode binder and a negative electrode conductive agent. The negative electrode active material, the negative electrode binder and the negative electrode conductive agent are blended to obtain the negative electrode material layer.

The possible ranges of the negative electrode binder and the negative electrode conductive agent are the same as those of the positive electrode binder and the positive electrode conductive agent respectively, and the details are not repeated here.

In some embodiments, the negative electrode plate further includes a negative electrode current collector, and the negative electrode material layer is formed on the surface of the negative electrode current collector.

The negative current collector is selected from metal materials that can conduct electrons. Preferably, the negative current collector includes one or more of Al, Ni, tin, copper and stainless steel. In a more preferred embodiment, the negative current collector is selected from copper foil.

In some embodiments, the lithium ion battery further includes a separator, and the separator is positioned between the positive electrode plate and the negative electrode plate.

The separator is a conventional diaphragm, and may be a polymer membrane, a non-woven fabric, etc., including but not limited to single-layer PP (polypropylene), single-layer PE (polyethylene), double-layer PP/PE, double-layer PP/PP, triple-layer PP/PE/PP and other diaphragm.

The present application will be further illustrated with embodiments.

The compounds involved in the following Embodiments and Comparative Examples are shown in Table 1 below.

Table 1

| Compound 1 | Compound 2 | Compound 3 |
|---|---|---|
| 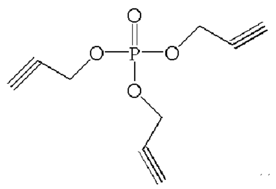 | 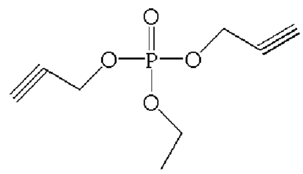 | 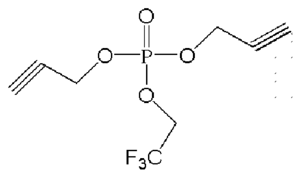 |
| Compound 4 | Compound 5 | Compound 6 |
| 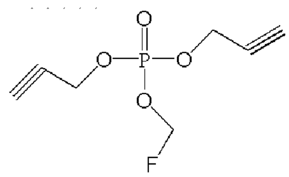 | 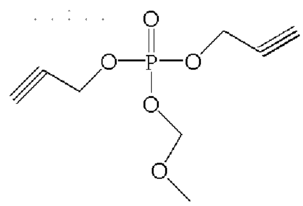 | 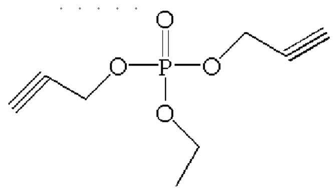 |

Table 2 Parameter Design of Embodiments and Comparative Examples

| Embodiments/ Comparative Examples | Positive electrode active material (mass ratio) | Compounds represented by structural formula I | Content of the compound represented by structural formula I in the positive electrode material layer k/% | Molar ratio "n" of element Mn to element Fe | Surface roughness "R" of the positive electrode material layer R/um | $\frac{1000k}{Rn}$ | Other additives in electrolyte and their content /% |
|---|---|---|---|---|---|---|---|
| Embodiment 1 | 20%$LiMn_{0.5}Fe_{0.5}PO_4$ 80%$LiNi_{0.5}Co_{0.2}Mn_{0.3}O_2$ | Compound 1 | 0.01 | 5.33 | 10.00 | 0.19 | / |
| Embodiment 2 | 30%$LiMn_{0.5}Fe_{0.5}PO_4$ 70%$LiNi_{0.5}Co_{0.2}Mn_{0.3}O_2$ | Compound 1 | 0.02 | 3.52 | 12.00 | 0.47 | / |
| Embodiment 3 | 40%$LiMn_{0.5}Fe_{0.5}PO_4$ 60%$LiNi_{0.5}Co_{0.2}Mn_{0.3}O_2$ | Compound 1 | 0.05 | 2.62 | 9.00 | 2.12 | / |
| Embodiment 4 | 50%$LiMn_{0.5}Fe_{0.5}PO_4$ 50%$LiNi_{0.5}Co_{0.2}Mn_{0.3}O_2$ | Compound 1 | 0.07 | 2.08 | 8.00 | 4.21 | / |
| Embodiment 5 | 60%$LiMn_{0.5}Fe_{0.5}PO_4$ 40%$LiNi_{0.5}Co_{0.2}Mn_{0.3}O_2$ | Compound 1 | 0.1 | 1.72 | 8.00 | 7.27 | / |
| Embodiment 6 | 70%$LiMn_{0.5}Fe_{0.5}PO_4$ 30%$LiNi_{0.5}Co_{0.2}Mn_{0.3}O_2$ | Compound 1 | 0.15 | 1.46 | 8.00 | 12.84 | / |
| Embodiment 7 | 80%$LiMn_{0.5}Fe_{0.5}PO_4$ 20%$LiNi_{0.5}Co_{0.2}Mn_{0.3}O_2$ | Compound 1 | 0.2 | 1.27 | 13.00 | 12.11 | / |
| Embodiment 8 | 20%$LiMn_{0.65}Fe_{0.35}PO_4$ 80%$LiNi_{0.5}Co_{0.2}Mn_{0.3}O_2$ | Compound 1 | 0.02 | 8.04 | 6.00 | 0.41 | / |
| Embodiment 9 | 30%$LiMn_{0.65}Fe_{0.35}PO_4$ 70%$LiNi_{0.5}Co_{0.2}Mn_{0.3}O_2$ | Compound 1 | 0.05 | 5.46 | 8.00 | 1.14 | / |
| Embodiment 10 | 40%$LiMn_{0.65}Fe_{0.35}PO_4$ 60%$LiNi_{0.5}Co_{0.2}Mn_{0.3}O_2$ | Compound 1 | 0.1 | 4.18 | 8.00 | 2.99 | / |
| Embodiment 11 | 50%$LiMn_{0.65}Fe_{0.35}PO_4$ 50%$LiNi_{0.5}Co_{0.2}Mn_{0.3}O_2$ | Compound 1 | 0.15 | 3.40 | 6.00 | 7.35 | / |
| Embodiment 12 | 60%$LiMn_{0.65}Fe_{0.35}PO_4$ 40%$LiNi_{0.5}Co_{0.2}Mn_{0.3}O_2$ | Compound 1 | 0.2 | 2.89 | 6.00 | 11.54 | / |
| Embodiment 13 | 70%$LiMn_{0.65}Fe_{0.35}PO_4$ 30%$LiNi_{0.5}Co_{0.2}Mn_{0.3}O_2$ | Compound 1 | 0.3 | 2.52 | 6.00 | 19.85 | / |

(continued)

| Embodiments/ Comparative Examples | Positive electrode active material (mass ratio) | Compounds represented by structural formula I | Content of the compound represented by structural formula I in the positive electrode material layer k/% | Molar ratio "n" of element Mn to element Fe | Surface roughness "R" of the positive electrode material layer R/um | $\frac{1000k}{Rn}$ | Other additives in electrolyte and their content /% |
|---|---|---|---|---|---|---|---|
| Embodiment 14 | 80%$LiMn_{0.65}Fe_{0.35}PO_4$ 20%$LiNi_{0.5}Co_{0.2}Mn_{0.3}O_2$ | Compound 1 | 0.35 | 2.24 | 6.00 | 26.00 | / |
| Embodiment 15 | 20%$LiMn_{0.65}Fe_{0.35}PO_4$ 80%$LiFePO_4$ | Compound 1 | 0.005 | 0.11 | 8.00 | 5.68 | / |
| Embodiment 16 | 30%$LiMn_{0.65}Fe_{0.35}PO_4$ 70%$LiFePO_4$ | Compound 1 | 0.01 | 0.18 | 8.00 | 6.94 | / |
| Embodiment 17 | 40%$LiMn_{0.65}Fe_{0.35}PO_4$ 60%$LiFePO_4$ | Compound 1 | 0.05 | 0.25 | 8.00 | 25.00 | / |
| Embodiment 18 | 50%$LiMn_{0.65}Fe_{0.35}PO_4$ 50%$LiFePO_4$ | Compound 1 | 0.1 | 0.33 | 8.00 | 37.88 | / |
| Embodiment 19 | 60%$LiMn_{0.65}Fe_{0.35}PO_4$ 40%$LiFePO_4$ | Compound 1 | 0.2 | 0.43 | 8.00 | 58.14 | / |
| Embodiment 20 | 70%$LiMn_{0.65}Fe_{0.35}PO_4$ 30%$LiFePO_4$ | Compound 1 | 0.3 | 0.54 | 6.00 | 92.59 | / |
| Embodiment 21 | 80%$LiMn_{0.65}Fe_{0.35}PO_4$ 20%$LiFePO_4$ | Compound 1 | 0.5 | 0.67 | 4.00 | 186.5 7 | / |
| Embodiment 22 | 20%$LiMn_{0.5}Fe_{0.5}PO_4$ 80%$LiNi_{0.5}Co_{0.2}Mn_{0.3}O_2$ | Compound 1 | 0.005 | 5.33 | 8.00 | 0.12 | / |
| Embodiment 23 | 50%$LiMn_{0.5}Fe_{0.5}PO_4$ 50%$LiNi_{0.5}CO_{0.2}Mn_{0.3}O_2$ | Compound 1 | 0.005 | 2.08 | 8.00 | 0.30 | / |
| Embodiment 24 | 50%$LiMn_{0.5}Fe_{0.5}PO_4$ 50%$LiNi_{0.5}Co_{0.2}Mn_{0.3}O_2$ | Compound 1 | 0.01 | 2.08 | 8.00 | 0.60 | / |
| Embodiment 25 | 50%$LiMn_{0.5}Fe_{0.5}PO_4$ 50%$LiNi_{0.5}Co_{0.2}Mn_{0.3}O_2$ | Compound 1 | 0.1 | 2.08 | 8.00 | 6.01 | / |
| Embodiment 26 | 50%$LiMn_{0.5}Fe_{0.5}PO_4$ 50%$LiNi_{0.5}Co_{0.2}Mn_{0.3}O_2$ | Compound 1 | 0.2 | 2.08 | 8.00 | 12.02 | / |

(continued)

| Embodiments/ Comparative Examples | Positive electrode active material (mass ratio) | Compounds represented by structural formula I | Content of the compound represented by structural formula I in the positive electrode material layer k/% | Molar ratio "n" of element Mn to element Fe | Surface roughness "R" of the positive electrode material layer R/um | $\frac{1000k}{Rn}$ | Other additives in electrolyte and their content /% |
|---|---|---|---|---|---|---|---|
| Embodiment 27 | 50%$LiMn_{0.5}Fe_{0.5}PO_4$ 50%$LiNi_{0.5}Co_{0.2}Mn_{0.3}O_2$ | Compound 1 | 0.3 | 2.08 | 8.00 | 18.03 | / |
| Embodiment 28 | 50%$LiMn_{0.5}Fe_{0.5}PO_4$ 50%$LiNi_{0.5}Co_{0.2}Mn_{0.3}O_2$ | Compound 1 | 0.3 | 2.08 | 0.50 | 288.4 6 | / |
| Embodiment 29 | 50%$LiMn_{0.5}Fe_{0.5}PO_4$ 50%$LiNi_{0.5}Co_{0.2}Mn_{0.3}O_2$ | Compound 1 | 0.3 | 2.08 | 2.00 | 72.12 | / |
| Embodiment 30 | 50%$LiMn_{0.5}Fe_{0.5}PO_4$ 50%$LiNi_{0.5}Co_{0.2}Mn_{0.3}O_2$ | Compound 1 | 0.3 | 2.08 | 4.00 | 36.06 | / |
| Embodiment 31 | 50%$LiMn_{0.5}Fe_{0.5}PO_4$ 50%$LiNi_{0.5}Co_{0.2}Mn_{0.3}O_2$ | Compound 1 | 0.3 | 2.08 | 6.00 | 24.04 | / |
| Embodiment 32 | 50%$LiMn_{0.5}Fe_{0.5}PO_4$ 50%$LiNi_{0.5}Co_{0.2}Mn_{0.3}O_2$ | Compound 1 | 0.3 | 2.08 | 10.00 | 14.42 | / |
| Embodiment 33 | 50%$LiMn_{0.5}Fe_{0.5}PO_4$ 50%$LiNi_{0.5}Co_{0.2}Mn_{0.3}O_2$ | Compound 1 | 0.3 | 2.08 | 12.00 | 12.02 | / |
| Embodiment 34 | 50%$LiMn_{0.65}Fe_{0.35}PO_4$ 50%$LiFePO_4$ | Compound 1 | 0.5 | 0.33 | 4.50 | 336.7 0 | / |
| Embodiment 35 | 50%$LiMn_{0.65}Fe_{0.35}PO_4$ 50%$LiFePO_4$ | Compound 1 | 0.3 | 0.33 | 4.00 | 227.2 7 | / |
| Embodiment 36 | 50%$LiMn_{0.65}Fe_{0.35}PO_4$ 50%$LiFePO_4$ | Compound 1 | 0.2 | 0.33 | 8.00 | 75.76 | / |
| Embodiment 37 | 50%$LiMn_{0.65}Fe_{0.35}PO_4$ 50%$LiFePO_4$ | Compound 1 | 0.1 | 0.33 | 8.00 | 37.88 | / |
| Embodiment 38 | 20%$LiMn_{0.65}Fe_{0.35}PO_4$ 80%$LiFePO_4$ | Compound 1 | 0.2 | 0.11 | 12.00 | 151.5 2 | / |
| Embodiment 39 | 20%$LiMn_{0.65}Fe_{0.35}PO_4$ 80%$LiFePO_4$ | Compound 1 | 0.5 | 0.11 | 13.00 | 349.6 5 | / |

(continued)

| Embodiments/ Comparative Examples | Positive electrode active material (mass ratio) | Compounds represented by structural formula I | Content of the compound represented by structural formula I in the positive electrode material layer k/% | Molar ratio "n" of element Mn to element Fe | Surface roughness "R" of the positive electrode material layer R/um | $\frac{1000k}{Rn}$ | Other additives in electrolyte and their content /% |
|---|---|---|---|---|---|---|---|
| Embodiment 40 | 50%$LiMn_{0.5}Fe_{0.5}PO_4$ 50%$LiNi_{0.6}Co_{0.2}Mn_{0.2}O_2$ | Compound 1 | 0.2 | 1.98 | 8.00 | 12.64 | / |
| Embodiment 41 | 50%$LiMn_{0.5}Fe_{0.5}PO_4$ 50%$LiNi_{0.7}Co_{0.2}Mn_{0.1}O_2$ | Compound 1 | 0.2 | 1.65 | 5.00 | 24.25 | / |
| Embodiment 42 | 50%$LiMn_{0.5}Fe_{0.5}PO_4$ 50%$LiNi_{0.8}Co_{0.1}Mn_{0.1}O_2$ | Compound 1 | 0.2 | 1.65 | 3.00 | 40.44 | / |
| Embodiment 43 | 50%$LiMn_{0.5}Fe_{0.5}PO_4$ 50%$LiNi_{0.5}Co_{0.2}Mn_{0.3}O_2$ | Compound 2 | 0.2 | 2.08 | 8.00 | 12.02 | / |
| Embodiment 44 | 50%$LiMn_{0.5}Fe_{0.5}PO_4$ 50%$LiNi_{0.5}Co_{0.2}Mn_{0.3}O_2$ | Compound 3 | 0.2 | 2.08 | 8.00 | 12.02 | / |
| Embodiment 45 | 50%$LiMn_{0.5}Fe_{0.5}PO_4$ 50%$LiNi_{0.5}Co_{0.2}Mn_{0.3}O_2$ | Compound 4 | 0.2 | 2.08 | 8.00 | 12.02 | / |
| Embodiment 46 | 50%$LiMn_{0.5}Fe_{0.5}PO_4$ 50%$LiNi_{0.5}Co_{0.2}Mn_{0.3}O_2$ | Compound 5 | 0.2 | 2.08 | 8.00 | 12.02 | / |
| Embodiment 47 | 50%$LiMn_{0.5}Fe_{0.5}PO_4$ 50%$LiNi_{0.5}Co_{0.2}Mn_{0.3}O_2$ | Compound 6 | 0.2 | 2.08 | 8.00 | 12.02 | / |
| Embodiment 48 | 50%$LiMn_{0.5}Fe_{0.5}PO_4$ 50%$LiNi_{0.5}CO_{0.2}Mn_{0.3}O_2$ | Compound 1 | 0.2 | 2.08 | 8.00 | 12.02 | DTD: 1 |
| Embodiment 49 | 50%$LiMn_{0.5}Fe_{0.5}PO_4$ 50%$LiNi_{0.5}CO_{0.2}Mn_{0.3}O_2$ | Compound 1 | 0.2 | 2.08 | 8.00 | 12.02 | PS: 1 |
| Embodiment 50 | 50%$LiMn_{0.5}Fe_{0.5}PO_4$ 50%$LiNi_{0.5}Co_{0.2}Mn_{0.3}O_2$ | Compound 1 | 0.2 | 2.08 | 8.00 | 12.02 | Trpropargyl phosphate: 1 |
| Embodiment 51 | 50%$LiMn_{0.5}Fe_{0.5}PO_4$ 50%$LiNi_{0.5}Co_{0.2}Mn_{0.3}O_2$ | Compound 1 | 0.2 | 2.08 | 8.00 | 12.02 | FEC:1 |
| Comparative Example 1 | 50%$LiMn_{0.5}Fe_{0.5}PO_4$ 50%$LiNi_{0.5}CO_{0.2}Mn_{0.3}O_2$ | Non | / | 2.08 | 8.00 | / | / |

(continued)

| Embodiments/ Comparative Examples | Positive electrode active material (mass ratio) | Compounds represented by structural formula I | Content of the compound represented by structural formula I in the positive electrode material layer k/% | Molar ratio "n" of element Mn to element Fe | Surface roughness "R" of the positive electrode material layer R/um | $\frac{1000k}{Rn}$ | Other additives in electrolyte and their content /% |
|---|---|---|---|---|---|---|---|
| Comparative Example 2 | 50%$LiMn_{0.65}Fe_{0.35}PO_4$ 50%$LiNi_{0.5}CO_{0.2}Mn_{0.3}O_2$ | Non | / | 3.40 | 8.00 | / | / |
| Comparative Example 3 | 50%$LiMn_{0.65}Fe_{0.35}PO_4$ 50%$LiFePO_4$ | Non | / | 0.33 | 8.00 | / | / |
| Comparative Example 4 | 50%$LiMn_{0.65}Fe_{0.35}PO_4$ 50%$LiFePO_4$ | Compound 1 | 0.5 | 0.33 | 4.00 | 378.7 9 | / |
| Comparative Example 5 | 60%$LiMn_{0.65}Fe_{0.35}PO_4$ 40%$LiFePO_4$ | Compound 1 | 0.4 | 0.43 | 2.00 | 465.1 2 | / |
| Comparative Example 6 | 80%$LiMn_{0.5}Fe_{0.5}PO_4$ 20%$LiNi_{0.5}Co_{0.2}Mn_{0.3}O_2$ | Compound 1 | 0.5 | 1.27 | 1.00 | 393.7 0 | / |
| Comparative Example 7 | 20%$LiMn_{0.65}Fe_{0.35}PO_4$ 80%$LiNi_{0.5}Co_{0.2}Mn_{0.3}O_2$ | Compound 1 | 0.01 | 8.04 | 12.00 | 0.10 | / |
| Comparative Example 8 | 30%$LiMn_{0.65}Fe_{0.35}PO_4$ 70%$LiNi_{0.5}Co_{0.2}Mn_{0.3}O_2$ | Compound 1 | 0.008 | 5.46 | 13.00 | 0.11 | / |
| Comparative Example 9 | 50%$LiMn_{0.5}Fe_{0.5}PO_4$ 50%$LiNi_{0.5}Co_{0.2}Mn_{0.3}O_2$ | Compound 1 | 0.001 | 2.08 | 3.00 | 0.16 | / |
| Comparative Example 10 | 50%$LiMn_{0.5}Fe_{0.5}PO_4$ 50%$LiNi_{0.5}Co_{0.2}Mn_{0.3}O_2$ | Compound 1 | 0.003 | 2.08 | 8.00 | 0.18 | / |
| Comparative Example 11 | 50%$LiMn_{0.5}Fe_{0.5}PO_4$ 50%$LiNi_{0.5}Co_{0.2}Mn_{0.3}O_2$ | Compound 1 | 2.0 | 2.08 | 8.00 | 120.1 9 | / |
| Comparative Example 12 | 20%$LiMn_{0.65}Fe_{0.35}PO_4$ 80%$LiNi_{0.5}Co_{0.2}Mn_{0.3}O_2$ | Compound 1 | 0.2 | 8.04 | 8.00 | 3.11 | / |
| Comparative Example 13 | 10%$LiMn_{0.65}Fe_{0.35}PO_4$ 90%$LiNi_{0.5}Co_{0.2}Mn_{0.3}O_2$ | Compound 1 | 0.2 | 14.41 | 8.00 | 1.73 | / |
| Comparative Example 14 | 100%$LiMn_{0.05}Fe_{0.95}PO_4$ | Compound 1 | 0.1 | 0.05 | 6.00 | 320.5 1 | / |

(continued)

| Embodiments/ Comparative Examples | Positive electrode active material (mass ratio) | Compounds represented by structural formula I | Content of the compound represented by structural formula I in the positive electrode material layer k/% | Molar ratio "n" of element Mn to element Fe | Surface roughness "R" of the positive electrode material layer R/um | $\frac{1000k}{Rn}$ | Other additives in electrolyte and their content /% |
|---|---|---|---|---|---|---|---|
| Comparative Example 15 | 50%$LiMn_{0.5}Fe_{0.5}PO_4$ 50%$LiNi_{0.5}Co_{0.2}Mn_{0.3}O_3$ | Compound 1 | 0.3 | 2.08 | 17.00 | 8.48 | / |
| Comparative Example 16 | 50%$LiMn_{0.5}Fe_{0.5}PO_4$ 50%$LiNi_{0.5}Co_{0.2}Mn_{0.3}O_2$ | Compound 1 | 0.2 | 2.08 | 0.40 | 240.3 8 | / |
| Comparative Example 17 | 50%$LiMn_{0.5}Fe_{0.5}PO_4$ 50%$LiNi_{0.5}CO_{0.2}Mn_{0.3}O_2$ | Non | / | 2.08 | 8.00 | / | Compound 1: 0.05 |

Embodiment 1

This embodiment is used to illustrate the lithium ion battery and its preparation method, including the following steps:

1) Preparation of positive electrode plate

Step 1: In NMP solvent, add PVDF as a binder and the compound represented by structural formula I shown in Table 2, and fully stir evenly to obtain PVDF glue solution with the compound represented by structural formula I.
Step 2: Add the conductive agent (super P+CNT) into the PVDF glue solution, and fully stir it evenly.
Step 3: Continue to add the positive electrode active material shown in Table 2, and fully stir evenly to finally obtain the desired positive electrode slurry.
Step 4: Evenly coat the prepared positive electrode slurry on the positive electrode current collector (such as aluminum foil), and after drying, roll the electrode plate by controlling the roughness of the roller to obtain a positive electrode plate. The surface roughness "R" of the active material layer of the positive electrode plate is shown in Table 2.
The percentage mass content "k" of the compound represented by structural formula I in the positive electrode material layer and the proportion of active substances are shown in Table 2.

2) Preparation of negative electrode plate

Step 1: Weigh the materials according to the ratio of graphite (Shanghai Shanshan, FSN-1): conductive carbon (super P): sodium carboxymethyl cellulose (CMC): styrene-butadiene rubber (SBR) = 96.3: 1.0: 1.2: 1.5 (mass ratio).
Step 2: Add CMC into pure water according to the solid content of 1.5%, and fully stir evenly (e.g., stirring time is 120 min) to prepare a transparent CMC glue solution.
Step 3: Add conductive carbon (super P) into the CMC glue solution, and fully stir evenly (e.g., stirring time is 9 0min) to prepare a conductive adhesive.
Step 4: Continue to add graphite, and fully stir evenly to obtain the desired negative electrode slurry.
Step 5: Evenly coat the prepared negative electrode slurry on the copper foil, and dry, roll, die-cut or strip to obtain a negative electrode plate.

3) Preparation of non-aqueous electrolyte

Mix ethylene carbonate (EC), diethyl carbonate (DEC) and ethyl methyl carbonate (EMC) according to the mass ratio of EC: DEC: EMC = 1: 1: 1, then add the lithium hexafluorophosphate ($LiPF_6$) until the molar concentration is 1 mol/L, and add 1% of $LiPO_2F_2$.

4) Preparation of lithium-ion battery core

Assemble the prepared positive electrode plate and the negative electrode plate into a laminated flexible battery core.

5) Injection and formation of battery core

In a glove box with the dew point controlled below -40°C, the prepared electrolyte is injected into the battery core, and then it is packed and sealed in vacuum condition and let stand for 24 hours. Then, formation of the first charge is performed according to the following steps: charging at 0.05C constant current for 180min, charging at 0.2C constant current to 3.95V, sealing in vaccum condition for the second time, further charging at 0.2C constant current to the cut-off voltage of the battery, after standing at room temperature for 24 hours, fully discharging at 0.2 C constant current to 3.0V.

Embodiments 2-51

Embodiments 2-51 are used to illustrate the lithium-ion battery and preparation method disclosed in the present application, including most of the steps in Embodiment 1, with the following differences:
the positive electrode plate components, surface roughness and electrolyte additive components were adopted according to Table 2.

Comparative Examples 1-17

Comparative Examples 1-17 are used to comparatively illustrate the lithium-ion battery and preparation method disclosed in the present application, including most of the steps in Example 1, with the following differences: the positive electrode plate components, surface roughness and electrolyte additive components were adopted according to Table 2.

Performance test

The following performance tests were conducted on the lithium-ion battery prepared above:
High-temperature cycle performance test: At 45°C, the formed battery was charged to the cut-off voltage at 1C constant current and constant voltage, then charged at constant voltage until the current dropped to 0.05C, and then discharged at 1C constant current to 3.0V. The above steps were repeated for 1500 cycles. The first discharge capacity, discharge DCIR, discharge capacity and discharge DCIR of the 1500th cycle were recorded.

The capacity retention rate and DCIR growth rate of high-temperature cycle were calculated according to the following formula:

Capacity retention rate of battery cycle = discharge capacity of the 1500th cycle/discharge capacity of the first cycle × 100%;

DCIR growth rate of battery cycle (%) = (discharge DCIR of the 1500th cycle - discharge --> DCIR of the first cycle )/discharge DCIR of the first cycle × 100%.

(1) Test results obtained from Embodiments 1-42 and Comparative Examples 1-17 are shown in Table 3.

Table 3

| Embodiments/Comparativ e Examples | Capacity retention rate after 1500 cycles at 45°C 1C/1C /% | DCIR growth rate after 1500 cycles 45°C 1C/1C /% |
|---|---|---|
| Embodiment 1 | 86.8 | 77.9 |
| Embodiment 2 | 87.3 | 79.7 |
| Embodiment 3 | 86.7 | 79.8 |
| Embodiment 4 | 87.5 | 79.2 |
| Embodiment 5 | 87.9 | 76.9 |
| Embodiment 6 | 87.9 | 77.0 |
| Embodiment 7 | 87.2 | 82.9 |
| Embodiment 8 | 86.9 | 84.9 |
| Embodiment 9 | 88.2 | 75.9 |
| Embodiment 10 | 88.7 | 73.9 |
| Embodiment 11 | 89.0 | 73.5 |
| Embodiment 12 | 89.2 | 71.5 |
| Embodiment 13 | 89.0 | 73.5 |
| Embodiment 14 | 89.3 | 72.4 |
| Embodiment 15 | 89.8 | 70.0 |
| Embodiment 16 | 90.2 | 68.0 |
| Embodiment 17 | 90.6 | 66.0 |
| Embodiment 18 | 91.2 | 64.0 |
| Embodiment 19 | 91.5 | 60.6 |
| Embodiment 20 | 92.9 | 52.7 |

(continued)

| Embodiments/Comparativ e Examples | Capacity retention rate after 1500 cycles at 45°C 1C/1C /% | DCIR growth rate after 1500 cycles 45°C 1C/1C /% |
|---|---|---|
| Embodiment 21 | 82.4 | 58.7 |
| Embodiment 22 | 80.6 | 105.5 |
| Embodiment 23 | 86.8 | 81.5 |
| Embodiment 24 | 87.0 | 80.7 |
| Embodiment 25 | 86.8 | 81.8 |
| Embodiment 26 | 94.4 | 48.7 |
| Embodiment 27 | 88.3 | 83.9 |
| Embodiment 28 | 80.8 | 104.5 |
| Embodiment 29 | 85.5 | 82.1 |
| Embodiment 30 | 85.9 | 81.9 |
| Embodiment 31 | 86.1 | 82.3 |
| Embodiment 32 | 87.4 | 80.4 |
| Embodiment 33 | 84.6 | 87.5 |
| Embodiment 34 | 82.4 | 98.2 |
| Embodiment 35 | 82.8 | 97.4 |
| Embodiment 36 | 88.8 | 74.4 |
| Embodiment 37 | 89.1 | 72.9 |
| Embodiment 38 | 83.9 | 89.7 |
| Embodiment 39 | 81.6 | 101.6 |
| Embodiment 40 | 85.6 | 91.8 |
| Embodiment 41 | 85.8 | 93.0 |
| Embodiment 42 | 86.4 | 94.2 |
| Comparative Example 1 | 71.3 | 149.4 |
| Comparative Example 2 | 70.6 | 153.3 |
| Comparative Example 3 | 69.4 | 166.7 |
| Comparative Example 4 | 75.1 | 160.5 |
| Comparative Example 5 | 72.2 | 131.3 |
| Comparative Example 6 | 73.5 | 128.7 |
| Comparative Example 7 | 67.6 | 176.4 |
| Comparative Example 8 | 67.1 | 181.2 |
| Comparative Example 9 | 69.0 | 170.2 |
| Comparative Example 10 | 72.1 | 143.2 |
| Comparative Example 11 | 67.7 | 184.2 |
| Comparative Example 12 | 71.1 | 147.3 |
| Comparative Example 13 | 67.9 | 183.2 |
| Comparative Example 14 | 71.5 | 146.1 |
| Comparative Example 15 | 75.1 | 127.4 |
| Comparative Example 16 | 72.1 | 141.3 |

(continued)

| Embodiments/Comparativ e Examples | Capacity retention rate after 1500 cycles at 45°C 1C/1C /% | DCIR growth rate after 1500 cycles 45°C 1C/1C /% |
|---|---|---|
| Comparative Example 17 | 74.7 | 137.2 |

According to the test results of Embodiments 1-42 and Comparative Examples 1-8, when the positive electrode material contains Mn and Fe, and the molar ratio "n" of Mn to Fe in the positive electrode material layer, the percentage mass content "k" of the compound represented by structural formula I in the positive electrode material layer and the surface roughness "R" of the positive electrode material layer meet the condition of $0.12 \leq \frac{1000k}{Rn} \leq 350$, the obtained lithium-ion battery has excellent high-temperature cycle capacity retention rate and low impedance growth. It is speculated that the compound represented by structural formula I forms an interface film with relatively stable properties on the surface of the active material represented by formula (1), which can effectively inhibit the dissolution of Mn ions in the positive electrode active material, and form a relatively stable orthorhombic olivine structure through the solid solution of Fe and Mn in the positive electrode material layer. This improves the stability of Mn ions in the positive electrode active material. Meanwhile, the surface roughness "R" of the positive electrode material layer is adjusted to control the shape of the interface film formed by the compound represented by structural formula **I,** which has a good inhibitory effect on the dissolution of Mn ions at high temperature in general, thereby improving the capacity retention rate of lithium-ion batteries and avoiding the increase of impedance.

From the test results of Embodiments 1-42, it can be seen that with the increase of $\frac{1000k}{Rn}$ value, the capacity retention rate of lithium-ion batteries first increases and then decreases, while the impedance growth rate decreases first and then increases, indicating that the molar ratio "n" of Mn to Fe in the positive electrode material layer, the percentage mass content "k" of the compound represented by structural formula I in the positive electrode material layer and the surface roughness "R" of the positive electrode material layer are related to the cycle life-related performance of lithium-ion battery. Especially, when $0.15 \leq \frac{1000k}{Rn} \leq 98$, the lithium-ion battery has the best high-temperature cycle capacity retention rate and low high-temperature cycle impedance growth rate.

From the test results of Embodiments 28-33, it can be seen that when the surface roughness "R" of the positive electrode material layer is changed, the film-forming effect of the compound 1 is affected. When the R value is too small, the active reaction area of the positive electrode plate is small, and the effect of the compound represented by structural formula I is not obvious, which affects the film-forming effect of the compound represented by structural formula I. However, when the R value is too large, the side reaction of electrolyte at the positive electrode will increase, which is not conducive to the improvement of battery performance.

According to the test results of Comparative Examples 9-16, even if the positive electrode material contains Mn and Fe, and the molar ratio "n" of Mn to Fe in the positive electrode material layer, the percentage mass content "k" of the compound represented by structural formula I in the positive electrode material layer and the surface roughness "R" of the positive electrode material layer meet the condition of $0.12 \leq \frac{1000k}{Rn} \leq 350$, the lithium-ion battery still does not have good electrochemical performance if the values of n, k and R do not meet the range limit.

According to the test results of Comparative Example 17 and Embodiment 26, when the compound represented by formula I is added to the non-aqueous electrolyte, the performance improvement of the battery is far less than that when the compound represented by formula I is added to the positive electrode material layer. This may be because the compound represented by formula I has high viscosity and low conductivity, and adding it to the electrolyte will affect the capacity, internal resistance and cycle performance of the battery.

(2) The test results obtained from Embodiments 26, 43-47 are shown in Table 4.

Table 4

| Embodiments/Com parative Examples | Capacity retention rate after 1500 cycles at 45°C 1C/1C /% | DCIR growth rate after 1500 cycles 45°C 1C/1C /% |
|---|---|---|
| Embodiment 26 | 94.4 | 48.7 |
| Embodiment 43 | 93.8 | 48.4 |
| Embodiment 44 | 94.3 | 48.8 |
| Embodiment 45 | 94.2 | 48.9 |

(continued)

| Embodiments/Com parative Examples | Capacity retention rate after 1500 cycles at 45°C 1C/1C /% | DCIR growth rate after 1500 cycles 45°C 1C/1C /% |
|---|---|---|
| Embodiment 46 | 94.4 | 48.1 |
| Embodiment 47 | 94.1 | 49.6 |

According to the test results of Embodiments 26, 43-47, when the molar ratio "n" of Mn to Fe in the positive electrode material layer, the percentage mass content "k" of the compound represented by structural formula I in the positive electrode material layer and the surface roughness "R" of the positive electrode material layer meet the preset relationship of $0.12 \le \frac{1000k}{Rn} \le 350$, the effects are similar. They all appear to improve the battery capacity and cycle performance of lithium-ion batteries to some extent, indicating that the relationship provided by the application is applicable to different compounds represented by structural formula I.

(3) The test results obtained from Embodiments 26, 48-51 are shown in Table 5.

Table 5

| Embodiments/Comparat ive Examples | Capacity retention rate after 1500 cycles at 45°C 1C/1C /% | DCIR growth rate after 1500 cycles 45°C 1C/1C /% |
|---|---|---|
| Embodiment 26 | 94.4 | 48.7 |
| Embodiment 48 | 95.1 | 46.2 |
| Embodiment 49 | 94.6 | 47.1 |
| Embodiment 50 | 95.2 | 45.4 |
| Embodiment 51 | 95.0 | 46.8 |

From the test results of Embodiments 26, 48-51, it can be seen that addition of the above additives DTD (vinyl sulfate), PS (1,3-propane sultone), tripropargyl phosphate or FEC (fluoroethylene carbonate) to the non-aqueous electrolyte can further improve the high-temperature cycle performance of battery. It is speculated that the compound represented by structural formula I in the positive electrode and the above additives participated together in the formation of the passivation film on the electrode surface, and a passivation film with excellent thermal stability was obtained. This results in a passive film with excellent thermal stability, which effectively reduces the reaction of electrolyte on the electrode surface and improves the electrochemical performance of the battery.

The above are merely the preferred embodiments of this application, and are not intended to limit the application. Any modification, equivalent substitution and improvement made within the spirit and principle of this application shall be included in the protection scope of this application.

## Claims

1. A positive electrode plate, comprising a positive electrode material layer, wherein the positive electrode material layer comprises a positive electrode active material and a compound represented by structural formula I:

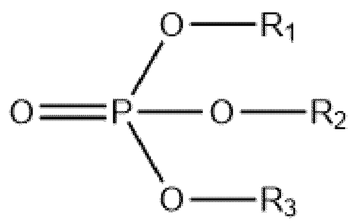

Structural formula I

$R_1$, $R_2$ and $R_3$ are each independently selected from an alkyl group with 1-5 carbon atoms, a fluoroalkyl group with

1-5 carbon atoms, an ether group with 1-5 carbon atoms, a fluoroether group with 1-5 carbon atoms and an unsaturated hydrocarbon group with 2-5 carbon atoms, and at least one of $R_1$, $R_2$ and $R_3$ is the unsaturated hydrocarbon group with 2-5 carbon atoms;

the positive electrode active material contains at least elements of Li, Mn and Fe, and comprises an active material represented by formula (1):

$LiMn_xFe_{1-x}PO_4$ Formula (1)

in formula (1), $0 \leq x < 1$;

the positive electrode plate meets the following requirements:

$$0.12 \leq \frac{1000k}{Rn} \leq 350;$$

and

$$0.1 \leq n \leq 8.1,\ 0.005 \leq k \leq 0.5,\ 0.5 \leq R \leq 13;$$

where n is a molar ratio of element Mn to element Fe in the positive electrode material layer;

k is a percentage mass content of the compound represented by structural formula I in the positive electrode material layer, in %; and

R is a surface roughness of the positive electrode material layer, in $\mu$m.

2. The positive electrode plate of claim 1, wherein the positive electrode plate meets the following requirements:

$$0.15 \leq \frac{1000k}{Rn} \leq 98.$$

3. The positive electrode plate of claim 1, wherein the molar ratio "n" of Mn to Fe in the positive electrode material layer is 0.3-6.

4. The positive electrode plate of claim 1, wherein the percentage mass content "k" of the compound represented by structural formula I in the positive electrode material layer is 0.05%-0.3%.

5. The positive electrode plate of claim 1, wherein the surface roughness "R" of the positive electrode material layer is 3$\mu$m-12$\mu$m.

6. The positive electrode plate of claim 1, wherein the positive electrode active material further comprises an active material represented by formula (2):

$Li_{1+y}Ni_aCo_bMn_{1-a-b}O_2$ Formula (2)

in formula (2), $-0.1 \leq y \leq 0.2$, $0 < a < 1$, $0 < b < 0.3$, $0 < a+b < 1$.

7. The positive electrode plate of claim 6, wherein a mass ratio of the active material represented by formula (1) to the active material represented by formula (2) is (20: 80)-(80: 20).

8. The positive electrode plate of claim 6, wherein the active material represented by formula (1) is selected from one or more of $LiFePO_4$, $LiFe_{0.3}Mn_{0.7}PO_4$, $LiFe_{0.35}Mn_{0.65}PO_4$ and $LiFe_{0.5}Mn_{0.5}PO_4$.

9. The positive electrode plate of claim 6, wherein the active material represented by formula (2) is selected from $LiNi_{0.4}Co_{0.2}Mn_{0.4}O_2$, $LiNi_{0.5}Co_{0.2}Mn_{0.3}O_2$, $LiNi_{0.6}Co_{0.2}Mn_{0.2}O_2$, $LiNi_{0.7}Co_{0.1}Mn_{0.2}O_2$, $LiNi_{0.8}Co_{0.1}Mn_{0.1}O_2$ and $LiNi_{0.93}Co_{0.07}Mn_{0.1}O_2$.

10. The positive electrode plate of claim 1, wherein the compound represented by structural formula I is formed on a surface of the positive electrode material layer, or the compound represented by structural formula I is mixed in the positive electrode material layer.

**11.** The positive electrode plate of claim 1, wherein when the positive electrode plate is ultrasonically vibrated in a solvent to produce a solution and the solution is analyzed using liquid chromatography-mass spectrometry (LC-MS), a characteristic peak appears in an area with a retention time of 6.5 min-7.5 min.

**12.** The positive electrode plate of claim 1, wherein the alkyl group with 1-5 carbon atoms is selected from methyl, ethyl, n-propyl, isopropyl, n-butyl, isobutyl, sec-butyl, tert-butyl, n-pentyl, isopentyl, sec-pentyl and neopentyl; one or more hydrogen elements in the alkyl group with 1-5 carbon atoms are substituted by fluorine elements to form a group, and the fluoroalkyl alkyl group with 1-5 carbon atoms is selected from this group.

**13.** The positive electrode plate of claim 1, wherein the unsaturated hydrocarbon group with 2-5 carbon atoms is selected from vinyl, propenyl, allyl, butenyl, pentenyl, methyl vinyl, methyl allyl, ethynyl, propynyl, propargyl, butynyl or pentynyl.

**14.** The positive electrode plate of claim 1, wherein the ether group with 1-5 carbon atoms is selected from methyl ether, ethyl ether, ethyl methyl ether, propyl ether, methyl propyl ether or ethyl propyl ether.

**15.** The positive electrode plate of claim 1, wherein the fluoroether group with 1-5 carbon atoms is selected from fluorinated methyl ether, fluorinated ethyl ether, fluorinated ethyl methyl ether, fluorinated propyl ether, fluorinated methyl propyl ether or fluorinated ethyl propyl ether.

**16.** The positive electrode plate of claim 1, wherein the compound represented by structural formula I may be at least one selected from the group consisting of phosphoric acid tripropargyl ester, dipropargyl methyl phosphonate, dipropargyl fluoromethyl phosphate, dipropargyl methoxymethyl phosphate, dipropargyl ethyl phosphate, dipropargyl propyl phosphate, trifluoromethyl dipropargyl phosphate, dipropargyl-2, 2, 2-trifluoroethyl phosphate, dipropargyl-3, 3, 3-trifluoropropyl phosphate, hexafluoroisopropyl dipropargyl phosphate, phosphoric acid triallyl ester, diallyl methyl phosphate, diallyl ethyl phosphate, diallyl propyl phosphate, trifluoromethyl diallyl phosphate, dipropargyl methyl ether phosphate, dipropargyl fluoromethyl ether phosphate, 2, 2, 2-trifluoroethyl diallyl phosphate, diallyl 3, 3, 3-trifluoropropyl phosphate or diallyl hexafluoroisopropyl phosphate.

**17.** A lithium-ion battery, comprising a negative electrode, a non-aqueous electrolyte and the positive electrode plate of any one of claims 1-16.

**18.** The lithium-ion battery of claim 17, wherein the non-aqueous electrolyte further comprises an additive, and the additive comprises at least one of cyclic sulfate compounds, sultone compounds, cyclic carbonate compounds, phosphate compounds, borate compounds and nitrile compounds.

**19.** The lithium-ion battery of claim 18, wherein the additive is added in an amount of 0.01%-30% based on the total mass of the non-aqueous electrolyte being 100%.

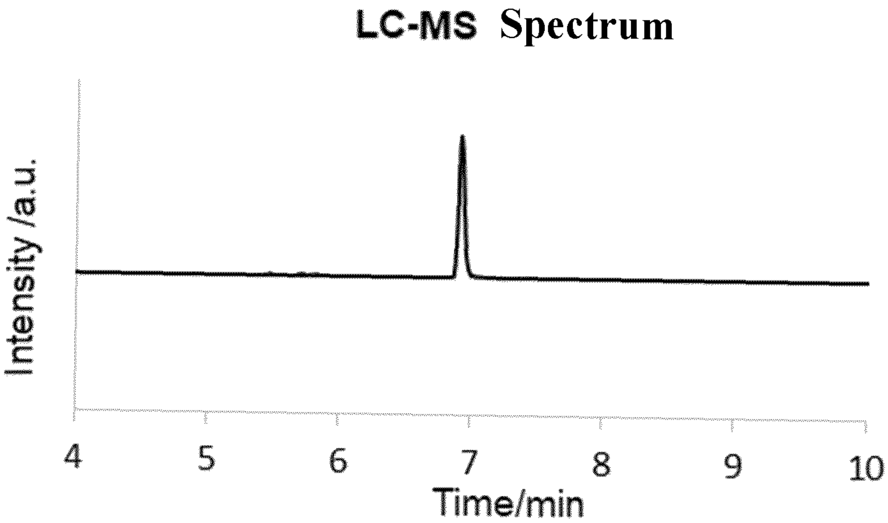


Fig. 1

**INTERNATIONAL SEARCH REPORT**

International application No. **PCT/CN2023/097913**

**A. CLASSIFICATION OF SUBJECT MATTER**

H01M4/136(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 正极, 阴极, 电极, 磷酸酯, 磷酸锰铁锂, 磷酸亚铁锂, 磷酸铁锰锂, 掺杂, 铁, 锰, 粗糙, positive, electrode, cathode, phosphate, ester, iron, manganese, lithium, doped, rough, coarse

**C. DOCUMENTS CONSIDERED TO BE RELEVANT**

| Category* | Citation of document, with indication, where appropriate, of the relevant passages | Relevant to claim No. |
|---|---|---|
| PX | CN 114975873 A (SHENZHEN CAPCHEM TECHNOLOGY CO., LTD.) 30 August 2022 (2022-08-30)<br>claims 1-11, and description, paragraphs 7-201 | 1-19 |
| A | CN 113644275 A (SHENZHEN CAPCHEM TECHNOLOGY CO., LTD.) 12 November 2021 (2021-11-12)<br>description, paragraphs 17-100 | 1-19 |
| A | CN 103762334 A (NINGDE AMPEREX TECHNOLOGY LTD.) 30 April 2014 (2014-04-30)<br>entire document | 1-19 |
| A | CN 103887491 A (SHANGHAI BYD CO., LTD.) 25 June 2014 (2014-06-25)<br>entire document | 1-19 |
| A | CN 106571446 A (LG CHEMICAL LTD.) 19 April 2017 (2017-04-19)<br>entire document | 1-19 |
| A | WO 2021018243 A1 (SHENZHEN CAPCHEM TECHNOLOGY CO., LTD.) 04 February 2021 (2021-02-04)<br>entire document | 1-19 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 August 2023** | **21 August 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/097913**

| Patent document cited in search report | | | Publication date (day/month/year) | Patent family member(s) | | | Publication date (day/month/year) |
|---|---|---|---|---|---|---|---|
| CN | 114975873 | A | 30 August 2022 | None | | | |
| CN | 113644275 | A | 12 November 2021 | US | 11502300 | B1 | 15 November 2022 |
| CN | 103762334 | A | 30 April 2014 | None | | | |
| CN | 103887491 | A | 25 June 2014 | None | | | |
| CN | 106571446 | A | 19 April 2017 | JP | 2017073378 | A | 13 April 2017 |
| | | | | JP | 6429172 | B2 | 28 November 2018 |
| | | | | KR | 20170041520 | A | 17 April 2017 |
| | | | | KR | 101748037 | B1 | 15 June 2017 |
| WO | 2021018243 | A1 | 04 February 2021 | CN | 112310395 | A | 02 February 2021 |

Form PCT/ISA/210 (patent family annex) (July 2022)